# EUROPÄISCHE PATENTANMELDUNG

(11) **EP 0 585 628 A1**
(43) Veröffentlichungstag der Anmeldung: **09.03.1994**
(21) Anmeldenummer: 93112361.6
(22) Anmeldetag: 02.08.1993
(51) Int. Cl.: G11B 27/30, G11B 27/10, G03B 31/06

(54) **Vorrichtung zum Speichern und Abspielen von Audioaufzeichnungen mit hierzu synchronem Betreiben von die Audiowiedergabe begleitenden Zusatzgeräten**

(30) Priorität: 03.09.1992 DE 4229359
(71) Anmelder: BÄSSGEN AV - TECHNIK GmbH, D-79104 Freiburg (DE)
(72) Erfinder: Bässgen, Stefan, D-79104, Freiburg (DE)
(74) Vertreter: Goy, Wolfgang, Dipl.-Phys.

(57) **Zusammenfassung**

Die Erfindung betrifft die Vertonung von Dias vorzugsweise unter Verwendung von mehreren Diaprojektoren. Als Träger für die Tonsignale dient ein digitaler Datenträger (CD oder DAT), auf dem die Daten sowohl der Audiosignale als auch die Daten der Steuer- und/oder Synchronsignale digital gespeichert sind, um somit eine optimale Tonqualität zu erhalten. Zum Abspeichern der Steuer- und/oder Synchrondaten wird zweckentfremdet jeweils das niederwertigste Bit der Audiodaten verwendet.

## Beschreibung

Die Erfindung betrifft eine Vorrichtung zum Speichern und Abspielen von Audioaufzeichnungen mit hierzu synchronem Betreiben von die Audiowiedergabe begleitenden Zusatzgeräten, wobei die Audiosignale sowie die Steuer- und/oder Synchronsignale für die Zusatzgeräte auf einem gemeinsamen Signalträger gespeichert sind.

Das besondere Anwendungsgebiet der Erfindung ist die Audio-Vision-Technik, und zwar die Präsentation von Das mit mehreren Projektoren mit Musik- und/oder Kommentaruntermalung. Die Erfindung ist jedoch nicht allein auf dieses Anwendungsgebiet beschränkt. Bei den Zusatzgeräten kann es sich um andere visuelle Zusatzgeräte handeln, beispielsweise in einer Discothek, wenn synchron zur Musik die Lightshow gesteuert werden soll. Weitere Anwendungsmöglichkeiten der Erfindung sind denkbar.

Die erfindungsgemäße Speicher- und Abspielvorrichtung ist im allgemeinsten Sinne zu verstehen. So kann es sich bei der Vorrichtung sowohl um das Speichermedium an sich handeln, aber auch um die Einrichtung zum Bearbeiten des Speichermediums im weitesten Sinne, d.h. die Einrichtung, mittels der die Signale auf dem Signalträger gespeichert werden sowie die Einrichtung zum Abspielen der Signalträger, also zum Herauslesen der Signale.

Bei der Audio-Vision-Technik zur Präsentation von Dias werden zur Steuerung der Diaprojektoren sowie für die Vertonung 4-Spur-Geräte mit einem herkömmlichen Magnetband verwendet. Auf den ersten beiden Spuren befindet sich dabei der (Stereo-)Ton, während sich auf der dritten und auf der vierten Spur die Steuersignale sowie der Zeitcode befinden. Der Ton ist dabei auf dem Magnetband in analoger Weise gespeichert. Nachteilig hierbei ist, daß durch diese analoge Speicherung der Ton verrauscht ist, wie man es von den Tonbandkassetten her kennt.

Davon ausgehend liegt der Erfindung die **Aufgabe** zugrunde, die Audiowiedergabe qualitätsmäßig zu verbessern und dabei aber auch gleichzeitig eine einfache Möglichkeit zur Steuerung der Zusatzgeräte vorzusehen.

Als technische **Lösung** wird mit der Erfindung vorgeschlagen, daß der Signalträger ein digitaler Datenträger ist, auf dem die Daten sowohl der Audiosignale als auch der Steuer- und/oder Synchronsignale digital gespeichert sind, wobei zum Abspeichern der Steuer- und/oder Synchrondaten zweckentfremdet ein oder mehrere Bits aus den Wörtern der Audiodaten verwendet werden.

Durch die digitale Tonaufzeichnung erfolgt die Audiowiedergabe in einer Qualität, wie man sie von CD-Platten her kennt. Dabei wird gleichzeitig auch eine Möglichkeit geschaffen, um die Steuer- und/oder Synchronsignale unterzubringen. Diese werden in digitaler Form über einen DAT-Rekorder oder eine bespielbare CD aufgezeichnet. Diese Speicherung der Audio- sowie Steuer- und/oder Synchrondaten ist auf handelsüblichen Datenträgern (DAT, CD etc.) möglich, wobei während des Abspielens dieses Datenträgers zeitgleich zu den Audiodaten für die Audiowiedergabe die Steuer- und/oder Synchronsignale zur Verfügung stehen. Erfindungsgemäß wird die Abspeicherung der Steuer- und/oder Synchrondaten auf dem Datenträger für die Audiodaten dadurch erreicht, daß ein oder mehrere Bits zweckentfremdet werden und dabei an der vorgesehenen Stelle die Audiodaten durch Steuer- und/oder Synchrondaten ersetzt werden. Vorzugsweise reicht hierfür jeweils 1 Bit pro Wort aus. Es ist auch nicht notwendig, daß alle Wörter mit Steuer- und/oder Synchrondaten ersetzt werden. So stehen bei heute üblichen CD's bei einer Abtastrate von beispielsweise 44,1 kHz für jedes Wort beispielsweise 16 Bit zur Verfügung, so daß, wenn jeweils 1 Bit eines jeden Wortes durch Steuer- und/oder Synchrondaten ersetzt wird, für Jeden Kanal 44100 Bit/sec an zusätzlichen Steuerinformationen zur Verfügung stehen

In einer bevorzugten Weiterbildung wird vorgeschlagen, daß zum Abspeichern der Steuer- und/oder Synchrondaten ein niederwertiges, vorzugsweise das niederwertigste Bit aus den Wörtern der Audiodaten verwendet wird. Durch die Zweckentfremdung des niederwertigsten Bits für die Steuer- und/oder Synchrondaten werden die Audiodaten nur geringfügig verfälscht, wobei die Verfälschung des Audiosignals derart gering ist, daß sie in den Bereichen, in denen so ein System Verwendung findet, keine Rolle spielt.

Ausgehend von der erfindungsgemäßen Vorrichtung, bei der für eine Stereo-Wiedergabe zwei Kanäle für die Audiodaten vorgesehen sind, wird in einer Weiterbildung vorgeschlagen, daß die Steuer- und/oder Synchrondaten entweder in einem der beiden Kanäle oder in beiden Kanälen gespeichert sind. Die beiden Audiokanäle können somit beide zusammen, getrennt oder nacheinander zur Speicherung von Steuer- und/oder Synchrondaten verwendet werden.

Ein Verfahren zum Einbringen der digitalen Steuer- und/oder Synchrondaten in die digitalen Audiodaten auf dem zuvor beschriebenen erfindungsgemäßen digitalen Datenträger schlägt vor, daß die auf einem digitalen Datenträger gespeicherten Ursprungsaudiodaten auf einen zweiten digitalen Datenträger kopiert werden, wobei im Verlauf des Kopiervorganges die für die Steuer- und/oder Synchrondaten vorgesehenen Bitstellen der Audiodaten entsprechend durch die einzubringenden Steuer- und/oder Synchrondaten ersetzt werden. Mittels eines derartigen Coders ist es auf technisch einfache Weise möglich, die digitalen Steuer- und/oder Synchrondaten aufzubringen. Die Grundidee besteht dabei darin, ausgehend von der Idealvorlage für die Audiodaten diese Audiodaten mit den Steuer- und/oder Synchrondaten zusammenzuführen und die aus Audio- sowie Steuer- und/oder Synchrondaten bestehenden Signale mittels eines DAT-Rekorders oder auf einer bespielbaren CD zu speichern. Dabei wird vorzugsweise das niederwertigste Bit des Audiokanals jeweils entfernt und durch ein Bit Steuer- und/oder Synchrondaten ersetzt. Die Ursprungsaudiodaten können dabei noch überhaupt keine Steuer- und/oder Synchrondaten aufweisen, so daß sie gewissermaßen noch unverfälscht sind. Es ist aber auch denkbar, daß die Ursprungsaudiodaten schon Steuer- und/oder Synchrondaten aufweisen und daher in gewissem Sinne verfälscht sind, daß aber mit dem erfindungsgemäßen Verfahren noch zusätzliche Steuer- und/oder Synchrondaten eingebracht werden.

Eine Weiterbildung hiervon schlägt vor, daß die digitalen Ursprungsaudiodaten seriell durch eine elektronische Schaltung geschickt werden, in der die für die Steuer- und/oder Synchrondaten vorgesehenen Bitstellen der Audiodaten entsprechend durch die einzubringenden Steuer- und/oder Synchrondaten ersetzt werden. Vorzugsweise werden hierfür zur Identifikation der Bitstellen für die Steuer- und/oder Synchrondaten die Wort- und Bit-Takte der Audiodaten verwendet.

Alternativ hierzu wird vorgeschlagen, daß die Ursprungsaudiodaten zunächst entweder als Ganzes oder blockweise in einen Massenspeicher eingelesen werden, in dem die für die Steuer- und/oder Synchrondaten vorgesehenen Bitsteilen der Audiodaten entsprechend durch die einzubringenden Steuer- und/oder Synchrondaten ersetzt werden, und daß anschließend die Daten aus dem Massenspeicher auf den zweiten Datenträger kopiert werden. Als Massenspeicher können beispielsweise eine Festplatte oder Halbleiter dienen.

Schließlich wird in einer Weiterbildung des Einbringverfahrens vorgeschlagen, daß bei zwei Audiokanälen die beiden Kanäle getrennt, zusammen oder nacheinander zum Einbringen von Steuer- und/oder Synchrondaten verwendet werden.

Ein Verfahren zum Herauslesen der digitalen Steuer- und/oder Synchrondaten aus dem digitalen Ausgangssignal des zuvor beschriebenen digitalen Datenträgers schlägt vor, daß die Daten des digitalen Datenträgers seriell durch eine elektronische Schaltung geschickt werden, wobei bei Anliegen der Steuer- und/oder Synchrondaten an den vorgegebenen Bitstellen diese herausgelesen werden. Dies stellt eine technisch einfache Möglichkeit dar, um mittels eines entsprechenden Decoders eine Auswertung der kombinierten Audio- sowie Steuer- und/oder Synchrondaten vorzunehmen. In der Praxis wertet dabei der Decoder das digitale Ausgangssignal eines digitalen Audio-Wiedergabegerätes aus, in der Regel ein digitaler AES/EBU oder S/PDIF-Ausgang.

Schließlich wird in einer Weiterbildung hiervon vorgeschlagen, daß zur Identifikation der Bitstellen für die Steuer- und/oder Synchrondaten die Wort- und Bit-Takte der Audiodaten verwendet werden.

Die Erfindung wird nachfolgend anhand der Zeichnungen beschrieben. In diesen zeigt:
- Fig. 1: ein Blockschaltbild des Coders;
- Fig. 2: ein Blockschaltbild des Decoders.

Anwendungsgebiet der Erfindung ist beispielsweise die Vertonung von Dias, indem parallel zu der Wiedergabe der Dias durch einen oder mehrere Projektoren synchron hierzu Musik und/oder ein Kommentar eingespielt werden soll. Die Tonwiedergabe soll dabei auf digitaler Basis (CD, DAT) erfolgen. Gleichzeitig müssen aber auch auf dem digitalen Datenträger die Steuersignale untergebracht werden, um die Diaprojektoren zu steuern. Die Grundidee der Erfindung liegt dabei darin, vorzugsweise das niederwertigste Bit der Wörter der Audiodaten zweckentfremdet durch ein Bit für die Steuer- und/oder Synchrondaten zu ersetzen. Bekanntlich stehen bei herkömmlichen CD's üblicherweise 16 Bit pro Wort bei einer Abtastrate von 44,1 kHz zur Verfügung. Selbstverständlich kann die Bit-Zahl pro Wort oder die Abtastrate auch variieren. Bei der zuvor erwähnten Abtastrate von 44,1 kHz stehen somit 44100 Bit/sec für jeden Kanal an zusätzlichen Steuerinformationen zur Verfügung. Indem das niederwertigste Bit für die Unterbringung der Steuer- und/oder Synchrondaten verwendet wird, werden die Audiodaten damit für die Audiowiedergabe nur geringfügig verfälscht, wobei die Verfälschung derart gering ist, daß sie in den Bereichen, in denen ein derartiges System Verwendung findet, so gut wie keine Rolle spielt. Selbstverständlich können aber auch mehrere Bits pro Wort verwendet werden, wenn dies aufgrund der Anzahl der Steuer- und/oder Synchrondaten notwendig ist. Vom Grundprinzip her können schließlich auch höherwertige Bits benutzt werden.

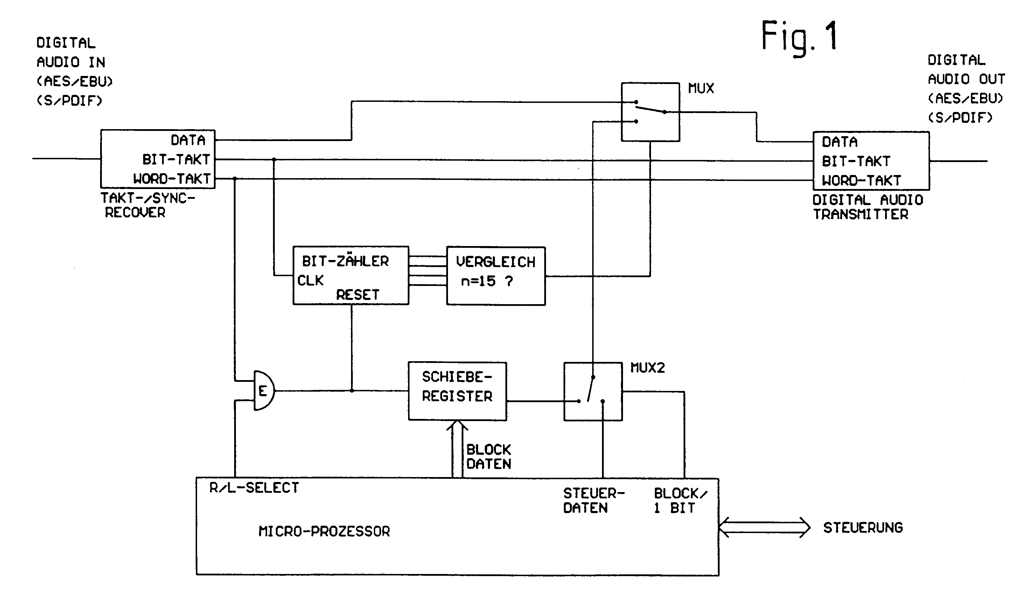

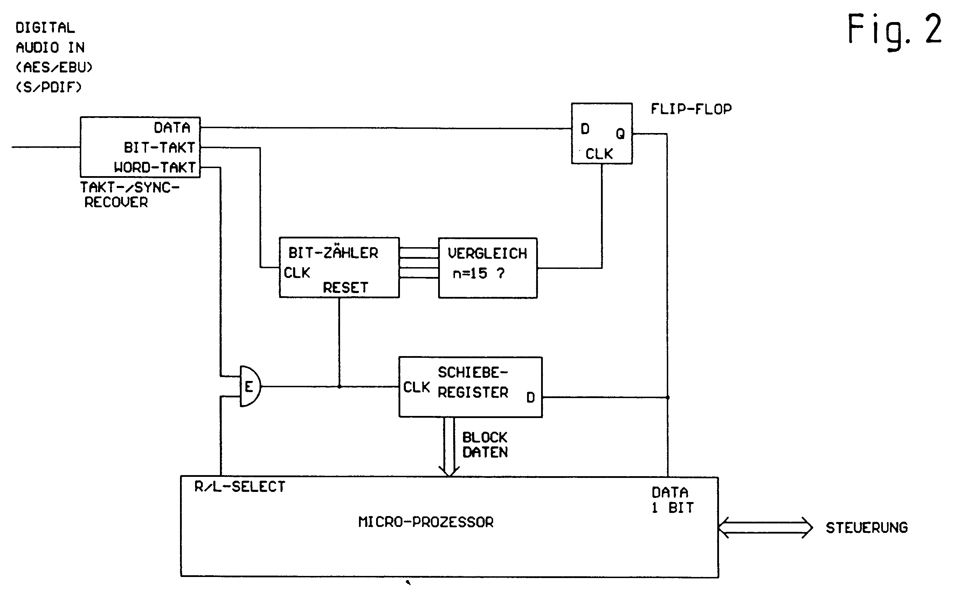

Zum Einbringen der digitalen Steuer- und/oder Synchrondaten in die Audiodaten dient ein Coder (Fig.1), während zum Herauslesen der gespeicherten digitalen Steuer- und/oder Synchrondaten aus dem digitalen Ausgangssignal ein Decoder (Fig.2) Verwendung findet.

Zunächst der Coder, wie er in Fig. 1 in seinem Blockschaltbild dargestellt ist. Es wird zunächst von den noch unverfälschten Ursprungsaudiodaten ausgegangen, in die noch nicht die Steuer- und/oder Synchrondaten eingebracht sind. Es wird somit das digitale Audioausgangssignal eines digitalen Audio-Wiedergabegerätes ausgewertet, In der Regel ein digitaler AES/EBU oder S/PDIF-Ausgang. Aus dieser digitalen Audioschnittstelle wird der Takt und die Synchronisation zurückgewonnen. Hierfür dient ein Takt-/Synchronisation-Recover, wie er als integrierte Lösung auf dem Markt erhältlich ist. Von diesem Takt-/Synchronisation-Recover gehen drei Signalleitungen aus, nämlich eine erste Signalleitung für die Audiodaten, eine zweite Signalleitung für den Bit-Takt sowie schließlich eine dritte Signalleitung für den Wort-Takt. In die Signalleitung für die Audiodaten ist dabei ein 1-Bit-Multiplexer MUX geschaltet. Im vorliegenden Fall soll das niederwertigste Bit eines 16-Bit-Wortes durch ein Steuerdatenbit ersetzt werden. Hierzu wird die Flanke des Wort-Taktes mittels eines Bit-Zählers und eines Vergleichers um so viele Bit-Takte, nämlich um 15 Bit-Takte verzögert, daß das Ausgangssignal des Vergleichers zu einem Zeitpunkt aktiv wird, an dem das jeweilige Steuerdaten-Bit auf der seriellen Audio-Datenleitung übertragen werden soll, um das 16. Bit entsprechend zu ersetzen. Zu diesem Zeitpunkt schaltet der 1-Bit-Multiplexer MUX um, so daß nicht das Original-Bit aus dem Eingangssignal, sondern ein Bit aus den Steuerdaten vom Mikroprozessor eingefügt wird. Nachdem das Steuerdaten-Bit eingefügt worden ist, schaltet der 1-Bit-Multiplexer MUX wieder zurück. Der nachgeschaltete Digital-Audio-Transmitter versieht die so modifizierten Audiodaten wieder mit den nötigen Synchronisationsdaten, so daß sie wieder der AES/EBU- oder S/PDIF-Spezifikation entsprechen und damit auf digitalen Audio-Aufnahmegeräten auf einem entsprechenden digitalen Datenträger aufgezeichnet werden können.

Das Steuerbit kommt entweder aus einer Ausgangsleitung eines Mikroprozessors (wie dies zuvor beschrieben wurde) oder wahlweise aus einem Schieberegister, in das der Mikroprozessor zuvor einige Bits eingeschrieben hat. Je nach dem verwendeten Protokoll ist eine derartige gepufferte Ausgabe der Steuerdaten mittels eines Schieberegisters geeigneter. Die Umschaltung zwischen diesen beiden Möglichkeiten erfolgt mittels des Multiplexers MUX2.

Die beschriebene Schaltung fügt Daten nur in einen der beiden Audio-Kanäle ein. Durch einen weiteren Zähler/Vergleicher und einen weiteren Multiplexer lassen sich auch Daten in beide Kanäle gleichzeitig einfügen. Die Kanalzuordnung erfolgt mittels der R/L-Select-Ausganges des Mikroprozessors, wie dies im Blockschaltbild dargestellt ist.

Fig. 2 zeigt das Blockschaitblid für den Decoder. Ausgegangen wird von den digitalen Audiosignalen, welche auf einem entsprechenden digitalen Datenträger gespeichert sind und bei denen das jeweils niederwertigste Bit durch ein Steuerdaten-Bit ersetzt ist. Der Decoder wertet dabei das digitale Ausgangssignal eines entsprechenden digitalen Audio-Wiedergabegerätes aus. Dabei wird aus der digitalen Audioschnittstelle mittels eines bereits zuvor erwähnten Takt-/Synchronisation-Recovers der Takt und die Synchronisation zurückgewonnen. Auf den drei Signalwegen steht neben den Audiodaten ein Bit-Takt sowie ein Wort-Takt zur Verfügung. Die Flanke des Wort-Taktes wird mittels eines Zählers und Vergleichers um so viele Bit-Takte, nämlich um 15 Bit-Takte verzögert, daß damit das Speicher-Flip-Flop zur Speicherung des Steuerbits getriggert werden kann und damit das Steuerdatum für dieses Audio-Wort zwischenspeichert. Die Steuerdaten werden dann einem Mikroprozessor zugeführt, der weitere Dekodier-, Prüfsummentests etc. durchführen kann.

Um den Mikroprozessor zu entlasten, ist ein Schieberegister vorgesehen, das einige Bits zwischenspeichert, die vom Mikroprozessor dann als Block gelesen werden können.

Da der Wort-Takt eine Flanke pro Audio-Wort aufweist, kann durch einfaches Invertieren des Wort-Taktes ausgewählt werden, ob die Steuerdaten des rechten oder linken Kanals benutzt werden sollen. Bei einer entsprechenden Auslegung der Schaltung können auch beide Kanäle benutzt werden.

Der Coder in Fig. 1 sowie der Decoder in Fig. 2 stellen lediglich Ausführungsbeispiele dar, um das erfindungsgemäße Grundprinzip zu realisieren. Selbstverständlich gibt es noch andere schaltungstechnische Möglichkeiten zur Realisierung der Erfindung.

## Patentansprüche

1. Vorrichtung zum Speichern und Abspielen von Audioaufzeichnungen mit hierzu synchronem Betreiben von die Audiowiedergabe begleitenden Zusatzgeräten,
wobei die Audiosignale sowie die Steuer- und/oder Synchronsignale für die Zusatzgeräte auf einem gemeinsamen Signalträger gespeichert sind,
**dadurch gekennzeichnet,**
daß der Signalträger ein digitaler Datenträger ist, auf dem die Daten sowohl der Audiosignale als auch der Steuer- und/oder Synchronsignale digital gespeichert sind, wobei zum Abspeichern der Steuer- und/oder Synchrondaten zweckentfremdet ein oder mehrere Bits aus den Wörtern der Audiodaten verwendet werden.

2. Vorrichtung nach Anspruch 1, dadurch gekennzeichnet, daß zum Abspeichern der Steuer- und/oder Synchrondaten ein niederwertiges, vorzugsweise das niederwertigste Bit aus den Wörtern der Audiodaten verwendet wird.

3. Vorrichtung nach Anspruch 1 oder 2, wobei für eine Stereo-Wiedergabe zwei Kanäle für die Audiodaten vorgesehen sind, dadurch gekennzeichnet, daß die Steuer- und/oder Synchrondaten entweder in einem der beiden Kanäle oder in beiden Kanälen gespeichert sind.

4. Verfahren zum Einbringen der digitalen Steuer- und/oder Synchrondaten in die digitalen Audiodaten auf dem digitalen Datenträger nach einem der Ansprüche 1 bis 3,
**dadurch gekennzeichnet,**
daß die auf einem digitalen Datenträger gespeicherten und von den Steuer- und/oder Synchrondaten noch unverfälschten Ursprungsaudiodaten auf einen zweiten digitalen Datenträger kopiert werden, wobei im Verlauf des Kopiervorganges die für die Steuer- und/oder Synchrondaten vorgesehenen Bitstellen der Audiodaten entsprechend durch die einzubringenden Steuer- und/oder Synchrondaten ersetzt werden.

5. Verfahren nach Anspruch 4, dadurch gekennzeichnet, daß die digitalen Ursprungsaudiodaten seriell durch eine elektronische Schaltung geschickt werden, in der die für die Steuer- und/oder Synchrondaten vorgesehenen Bitstellen der Audiodaten entsprechend durch die einzubringenden Steuer- und/oder Synchrondaten ersetzt werden.

6. Verfahren nach Anspruch 5, dadurch gekennzeichnet, daß zur Identifikation der Bitstellen für die Steuer- und/oder Synchrondaten die Wort- und Bit-Takte der Audiodaten verwendet werden.

7. Verfahren nach Anspruch 4, dadurch gekennzeichnet, daß die Ursprungsaudiodaten zunächst entweder als Ganzes oder blockweise in einen Massenspeicher eingelesen werden, in dem die für die Steuer- und/oder Synchrondaten vorgesehenen Bitstellen der Audiodaten entsprechend durch die einzubringenden Steuer- und/oder Synchrondaten ersetzt werden, und daß anschließend die Daten aus dem Massenspeicher auf den zweiten Datenträger kopiert werden.

8. Verfahren nach einem der Ansprüche 4 bis 7, dadurch gekennzeichnet, daß bei zwei Audiokanälen die beiden Kanäle getrennt, zusammen oder nacheinander zum Einbringen von Steuer- und/oder Synchrondaten verwendet werden.

9. Verfahren zum Herauslesen der digitalen Steuer- und/oder Synchrondaten aus dem digitalen Ausgangssignal des digitalen Datenträgers nach einem der Ansprüche 1 bis 3,
**dadurch gekennzeichnet,**
daß die Daten des digitalen Datenträgers seriell durch eine elektronische Schaltung geschickt werden, wobei bei Anliegen der Steuer- und/oder Synchrondaten an den vorgegebenen Bitstellen diese herausgelesen werden.

10. Verfahren nach Anspruch 9, dadurch gekennzeichnet, daß zur Identifikation der Bitstellen für die Steuer- und/oder Synchrondaten die Wort- und Bit-Takte der Audiodaten verwendet werden.
